# EUROPÄISCHE PATENTSCHRIFT

(11) **EP 2 585 638 B1**
(45) Veröffentlichungstag und Bekanntmachung des Hinweises auf die Patenterteilung: **16.09.2015**
(21) Anmeldenummer: 11729555.0
(22) Anmeldetag: 15.06.2011
(51) Int. Cl.: E01C 9/00, A01G 13/02

(54) **Baumscheibe**
Tree grate
Grille d'arbre

(30) Priorität: 22.06.2010 DE 202010009360 U
(43) Veröffentlichungstag der Anmeldung: 01.05.2013
(73) Patentinhaber: Nordeon B.V., 3581 CC Utrecht (NL)
(72) Erfinder: LANGE, Thomas, 78166 Donaueschingen-Neudingen (DE)
(74) Vertreter: Binner, Bernhard
(86) Internationale Anmeldenummer: PCT/EP2011/002956
(87) Internationale Veröffentlichungsnummer: WO 2011/160789

(56) Entgegenhaltungen:
- CH-A5- 674 034
- FR-A1- 2 832 025
- FR-E- 26 775
- NL-C2- 1 035 676

## Beschreibung

Die Erfindung betrifft eine Baumscheibe zur Abdeckung und zum Schutz des Umgebungsbereiches eines Baumstammes, wobei die Baumscheibe eine begehbare und/oder befahrbare Oberfläche bildet und für den Wasserdurchtritt mehrere Durchbrüche unterschiedlicher oder gleicher Formgebung aufweist.

Baumscheiben dienen bekannterweise zum Schutz des Umgebungsbereiches eines Baumes, insbesondere in unmittelbarer Nachbarschaft des Baumstammes. Dabei werden solche Baumscheiben in der Regel mehrteilig ausgebildet und mittels einer Stützkonstruktion auf bzw. im Untergrund verankert. Da solche Baumscheiben in der Regel im städtischen Bereich in Parkanlagen oder auch auf Parkplätzen eingesetzt werden, sind diese bezüglich ihrer Stabilität derart ausgestaltet, dass diese zumindest begehbar und erforderlichenfalls auch befahrbar ausgebildet sind. Um die Bewässerung des Baumes zu gewährleisten, weisen solche Baumscheiben mehrere Durchbrüche unterschiedlicher oder gleicher Formgebung auf, so dass Regenwasser durch die Baumscheibe hindurch treten und das Wurzelwerk des Baumes bewässern kann.

Hierzu sei beispielhaft aus die NL 1035676 C verwiesen. Die dort beschriebene Baumscheibe weist mehrere Durchbrüche in Form von kreisrunden Löchern unterschiedlicher Größe auf. Des weiteren sind sich vertikal nach oben erstreckende Vorsprünge vorgesehen, welche abgewinkelt oder geradlinig verlaufen. Diese Vorsprünge sind in ihrer Ausdehnung relativ kurz ausgebildet und dienen zur Versteifung der Baumscheibe.

In neuerer Zeit sind zur optischen Gestaltung des Umgebungsbereiches eines Baumes unterschiedlich ausgebildete Baumscheiben kreiert worden. So können die Durchbrüche als bogenförmig oder gradlinig verlaufende Spalte in der Oberfläche bzw. in der Baumscheibe ausgebildet sein. Auch sind Durchbrüche in gleichmäßiger Anordnung in kreisrunder Ausbildung bekannt.

Des Weiteren ist man in jüngerer Zeit zu optischen Ausgestaltungen übergegangen, bei welchen die Baumscheiben nicht nur eben im Umgebungsbereich des Baumes angebracht werden, sondern beispielsweise mit einer Steigung oder auch mit Wölbungen versehen sein können. Insbesondere für den Fall, wenn eine solche Baumscheibe ausgehend vom Baumstamm ein Gefälle aufweist, kann eine ausreichende Bewässerung des Wurzelwerkes, je nach Ausbildung der Durchbrüche, nicht stets sicher gewährleistet werden. So ist zu beobachten, dass bei entsprechender Formgestaltung und Ausrichtung der Durchbrüche, welche auch durchgehend in der Baumscheibe vorgesehen sein können, ein Großteil des Regenwassers auf der Baumscheibe nach außen abfließt, so dass das Wurzelwerk im stammnahen Bereich nur unzureichend bewässert wird.

Demgemäß liegt der Erfindung die Aufgabe zugrunde, eine Baumscheibe der gattungsgemäßen Art derart auszugestalten, dass eine möglichst ausreichende Bewässerung des Wurzelwerkes eines Baumes, insbesondere im näheren Umgebungsbereich des Baumstammes, gewährleistet ist.

Die Aufgabe wird erfindungsgemäß dadurch gelöst, dass auf der Oberfläche zwischen den Durchbrüchen erhabene Leitstege vorgesehen sind, welche sich von Rand zu Rand der Durchbrüche erstrecken und, dass die Leitstege in ihrer Höhe und Anordnung derart ausgebildet sind, dass auf der Oberfläche abfließendes Wasser in die Durchbrüche geleitet wird.

Durch die erfindungsgemäße Ausgestaltung wird das auf der Baumscheibe auftreffende Regenwasser in möglichst kurzen Wegen zu den vorhandenen Durchbrüchen geleitet. Hierzu sind auf der Oberfläche diverse Leitstege zwischen den Durchbrüchen vorgesehen, welche im Prinzip quer zu einer möglichen Fließrichtung des abfließenden Regenwassers verlaufen. Dadurch ergibt sich zumindest eine Art Leitfunktion, welche bewirkt, dass das Regenwasser auch im stammnahen Bereich eines Baumes in die Durchbrüche und somit in den Untergrund zum Wurzelwerk eines Baumes gelangt.

Weitere vorteilhafte Ausgestaltungen der Erfindung sind den weiteren Unteransprüchen zu entnehmen.

So kann gemäß Anspruch 2 vorgesehen sein, dass die Leitstege eine abgerundete Querschnittsform aufweisen. Durch diese Ausgestaltung wird insbesondere ein durch die Formgebung der Durchbrüche und deren Verlauf gestaltetes Design möglichst nicht beeinflusst. Durch die abgerundete Formgebung sind die Leitstege visuell kaum erkennbar, obgleich sie deren Leitfunktion für das abfließende Regenwasser gleichwohl erfüllen.

Weiter kann gemäß Anspruch 3 vorgesehen sein, dass die Leitstege eine quadratische oder rechteckige Querschnittsform aufweisen. Durch diese quadratische oder rechteckige Querschnittsform sind die Leitstege optisch gut erkennbar, so dass durch entsprechende Anordnung und Wahl des Verlaufs dieser Leitstege zusätzliche optische Effekte erreichbar sind.

Weiter kann gemäß Anspruch 4 vorgesehen sein, dass die Leitstege eine ebene Oberseite bilden und zur Oberfläche der Baumscheibe hin einen abgerundeten Übergangsbereich bilden. Diese Ausgestaltung ermöglicht insbesondere eine einfache Herstellung, wobei, wie bereits zu Anspruch 3 beschrieben, zusätzliche optische Effekte auf der Oberfläche der Baumscheibe durch entsprechende Wahl der Formgebung und des Verlaufs der Leitstege erreichbar sind.

Gemäß Anspruch 5 kann des Weiteren vorgesehen sein, dass die Leitstege eine Höhe von 0,5 mm bis 2,5 mm aufweisen. Soll das vorhandene Design einer Baumscheibe möglichst unbeeinflusst bleiben, so ist eine geringere Höhe der Leitstege zu wählen. Diese sollte allerdings nicht kleiner als 0,5 mm sein, da ansonsten die gewünschte Leitfunktion nur schwach ausgeprägt ist. Sind die Leitstege höher ausgebildet, beispielsweise bis zu 2,5 mm, und gemäß Anspruch 2 mit einer abgerundeten Querschnittsform versehen, so wird einerseits eine äußerst gute Leitfunktion gewährleistet, wobei gleichzeitig die Optik einer bestehenden Baumscheibe nur unwesentlich beeinflusst wird. Eine höhere Ausbildung der Leitstege hat des Weiteren auch eine verbesserte Rutschhemmung zur Folge, was insbesondere bei nasser Oberfläche der Baumscheibe von Vorteil ist.

Des Weiteren können die Leitstege gemäß Anspruch 6 eine Breite von 1 mm bis 3 mm aufweisen. Eine gewisse Mindestbreite ist hier durchaus gewünscht, um ein zu starkes Überströmen von ablaufendem Regenwasser möglichst zu vermeiden.

Gemäß Anspruch 7 können wiederum die Durchbrüche geradlinig und/oder bogenförmig verlaufen. Dabei können die Leitstege entsprechend dieses Verlaufs der Durchbrüche beispielsweise quer zu den Randkanten verlaufend ausgebildet sein. Dabei sind natürlich auch unterschiedliche Ausrichtungen und Verläufe solcher Leitstege denkbar. So können diese ebenfalls, sofern sie rein nur als "Wasserleitsystem" vorgesehen sind, geradlinig zwischen den Durchbrüchen verlaufen. Soll noch zusätzlich ein gewisser optischer Effekt erreicht werden, so können diese Durchbrüche auch bogenförmig verlaufend ausgebildet sein.

So kann beispielsweise gemäß Anspruch 8 vorgesehen sein, dass die Durchbrüche in gleichmäßiger Verteilung in der Baumscheibe angeordnet sind und einen kreisrunden oder ovalen Querschnitt aufweisen. Bei dieser Ausgestaltung der Durchbrüche können die Leitstege zwischen den Durchbrüchen als geradlinige Stege verlaufend angeordnet sein, so dass sichergestellt ist, dass abfließendes Regenwasser in die Durchbrüche geleitet wird.

Weiter kann gemäß Anspruch 9 vorgesehen sein, dass die Durchbrüche einen Flächenanteil von etwa 20 % bis 40 % der Oberfläche der Baumscheibe einnehmen. Durch diese Ausgestaltung ist insbesondere sichergestellt, dass ein möglichst großer Anteil von auf die Oberfläche der Baumscheibe auftreffendem Regenwasser sicher durch die Leitstege in die Durchbrüche geleitet wird.

In besonderer Ausgestaltung kann des Weiteren gemäß Anspruch 10 vorgesehen sein, dass die Oberfläche der Baumscheibe ebene, konkave und/oder konvexe Bereiche aufweist und/oder in gerader oder leicht schräger Einbaulage auf dem Untergrund angeordnet ist. Durch diese Ausgestaltung kann die Ableitung des Regenwassers insbesondere bei schräger Einbaulage und/oder konkaver oder konvexer bereichsweisen Ausbildung auch gezielt erfolgen. Auch in diesen Fällen dienen die zwischen den Durchbrüchen vorgesehenen Leitstege zur sicheren und zielgerichteten Wasserableitung.

Des Weiteren sei an dieser Stelle angemerkt, dass die Leitstege zusätzlich zu ihrer Leitfunktion auch eine Sicherheitsfunktion, insbesondere in Bezug auf eine erhöhte Rutschsicherheit auf der Oberfläche der Baumscheibe mit sich bringen. Insbesondere bei feuchter Witterung wird somit die Rutschgefahr, insbesondere bei begehbar verlegten Baumscheiben, deutlich vermindert.

Anhand der Zeichnung werden nachfolgend einige Ausführungsvarianten der Erfindung beispielhaft näher erläutert. Da Baumscheiben in vielfältiger Weise ausgestaltet sein können, insbesondere bezüglich der Form und Anordnung der Durchbrüche bzw. auch der Formgebung der Oberfläche mit den Durchbrüchen, sind die nachfolgenden Ausführungsvarianten lediglich beispielhaft, insbesondere bezüglich der Funktionsweise und Anordnung der Leitstege zu verstehen. Es zeigt:
- Fig. 1: eine perspektivische Darstellung eines Baumscheibensegmentes in einer ersten Ausführungsvariante;
- Fig. 2: einen vergrößerten Ausschnitt II des Baumscheibensegmentes II aus Fig. 1;
- Fig. 3: eine Draufsicht zweier zu einer kompletten Baumscheibe miteinander kombinierten Baumscheibensegmenten aus Fig. 1;
- Fig. 4: eine erste mögliche Querschnittsform eines Leitsteges im Schnitt;
- Fig. 5: eine zweite mögliche Querschnittsform eines Leitsteges im Schnitt;
- Fig. 6: eine dritte mögliche Querschnittsform eines Leitsteges im Schnitt;
- Fig. 7: eine vierte mögliche Querschnittsform eines Leitsteges im Schnitt;
- Fig. 8: eine Draufsicht auf eine Baumscheibe, welche aus insgesamt vier gleichartigen Baumscheibensegmenten besteht, welche mit bogenförmig verlaufenden Durchbrüchen versehen sind;
- Fig. 9: eine Draufsicht auf ein Baumscheibensegment mit künstlerisch designten Durchbrüchen sowie kreisbogenförmig verlaufenden Leitstegen.

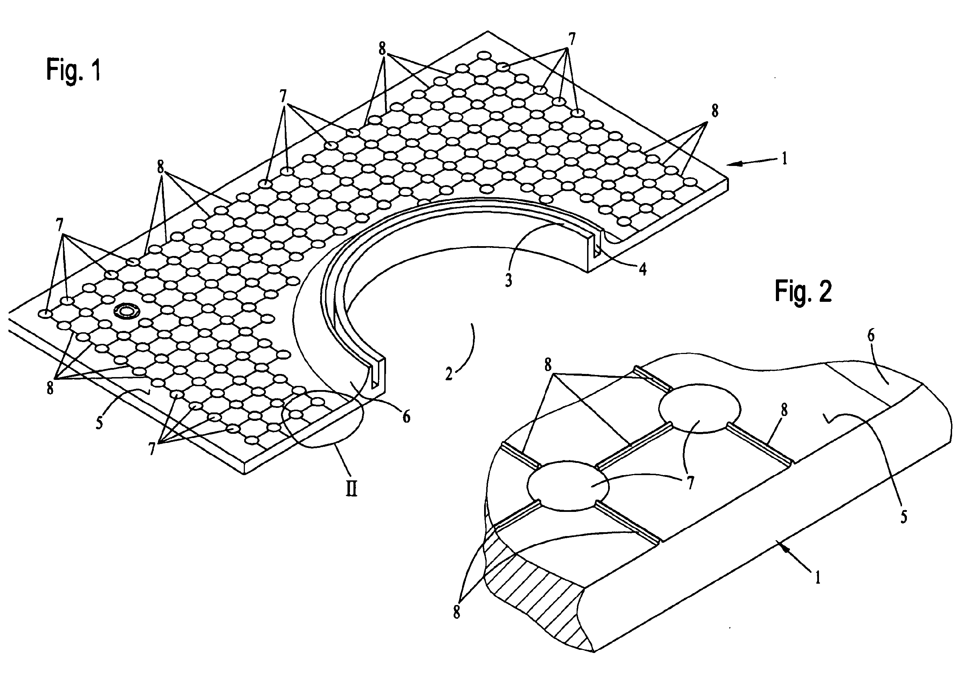

Fig. 1 zeigt eine perspektivische Darstellung eines Baumscheibensegmentes 1. Zur vollständigen Abdeckung des Umgebungsbereiches eines Baumstammes sind von solchen Baumscheibensegmenten 1 zwei Stück erforderlich. Zur Aufnahme des eigentlichen Baumstammes weist das Baumscheibensegment 1 eine etwa halbkreisförmig ausgebildete Aussparung 2 auf, welche zusammen mit dem zweiten Baumscheibensegment, welches identisch ausgebildet ist, den entsprechenden Baumstamm vollständig umschließt. Beim vorliegenden Ausführungsbeispiel weist diese Aussparung in ihrem Randbereich einen axial erhöhten Aufnahmesteg 3 auf, welcher mit einer Aufnahmenut 4 versehen ist. Bei dieser speziellen Ausgestaltung des Baumscheibensegmentes 1 dient diese Aufnahmenut 4 beispielsweise zur Aufnahme von elektrischen Leuchtmitteln.

Der Aufnahmesteg 4 bildet zur Oberfläche 5 des Baumscheibensegmentes 1 einen kreisbogenförmigen Übergang 6, über welchen auftreffendes Regenwasser auf die Oberfläche 5 des Baumscheibensegmentes 1 geleitet wird.

Des Weiteren ist aus Fig. 1 ersichtlich, dass das Baumscheibensegment 1 mehrere Durchbrüche 7 mit kreisrundem Querschnitt aufweist. Diese Durchbrüche 7 sind beim dargestellten Ausführungsbeispiel in einer rasterartigen Matrix im Baumscheibensegment 1 bzw. dessen Oberfläche 5 angeordnet.

Um nun zu verhindern, dass auftreffendes Regenwasser zwischen diesen Durchbrüchen hindurch bis zum äußeren Randbereich des Baumscheibensegmentes 1 gelangen kann, sind zwischen den Durchbrüchen 7 gitterartig angeordnete Leitstege 8 vorgesehen, durch welche das abfließende Regenwasser sicher in die Durchbrüche 7 geleitet wird. D. h., dass diese Leitstege 8 zwischen den jeweils benachbarten Durchbrüchen 7 angeordnet sind und sich von einem Rand des einen Durchbruches 7 bis zum anderen Rand des anderen Durchbruches 7 erstrecken.

Hierzu zeigt Fig. 2 einen vergrößerten Ausschnitt II aus Fig. 1. Hierbei ist in Fig. 2 noch ein Teil des Überganges 6 vom Aufnahmesteg 3 (in Fig. 2 nicht sichtbar) zur Oberfläche 5 des Baumscheibensegmentes 1 erkennbar.

Weiter ist ersichtlich, dass die Leitstege 8 zwischen zwei benachbarten Durchbrüchen 7 angeordnet sind. Dabei überragen diese Leitstege 8 die Oberfläche 5 des Baumscheibensegmentes 1 zumindest soweit, dass abfließendes Regenwasser sicher durch diese Leitstege 8 in die jeweiligen Durchbrüche 7 geleitet wird. Durch diese Maßnahme wird sichergestellt, dass der von dem Baumscheibensegment 1 abgedeckte Bereich insbesondere in unmittelbarer Nähe des Baumstammes mit ausreichend Regenwasser versorgt wird. Somit kann durch diese vorgesehenen Leitstege 8 abfließendes Regenwasser nicht ungehindert in den Randbereich des Baumscheibensegmentes 1 abfließen.

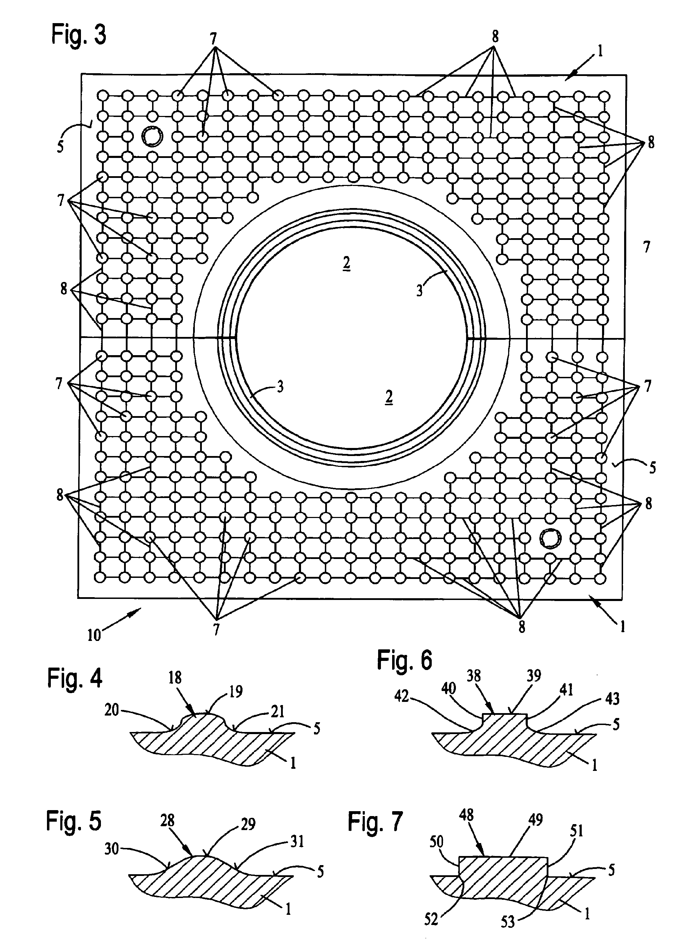

Fig. 3 zeigt hierzu eine vollständige Baumscheibe 10, welche aus zwei identisch ausgebildeten Baumscheibensegmenten 1 aus Fig. 1 besteht. Es ist erkennbar, dass die beiden Baumscheiben 10 mit ihren beiden Aussparungen 2 einen kreisringförmigen Aufnahmebereich für einen Baumstamm bilden. Des Weiteren ergänzen sich die beiden Aufnahmestege 3 der beiden Baumscheibensegmente 1 zu einem vollständig umlaufenden Ringsteg.

Weiter ist erkennbar, dass die Leitstege 8 zwischen den jeweiligen Durchbrüchen 7 derart angeordnet sind, dass ein ungehindertes Abfließen von auf der Oberfläche 5 der beiden Baumscheibensegmente 1 auftreffendem Regenwasser zumindest größtenteils verhindert wird.

Die Leitstege 8 aus Fig. 2 bestehen beispielsweise aus einem mittleren, nach außen gewölbten, halbkreisförmigen Element, welches über zwei viertelkreisförmige Elemente in die Oberfläche 5 des Baumscheibensegmentes 1 übergeht. Dadurch ergibt sich eine relativ abgerundete Kontur, so dass hier insbesondere beim Betreten keine Verletzungen auftreten können. In der Darstellung der Fig. 2 sind dabei die Leitstege 8 zu deren besseren Erkennbarkeit überhöht dargestellt. Außer dieser Querschnittsausbildung der Leitstege 8 aus Teilkreissegmenten sind durchaus auch andere Querschnittsformen denkbar, welche für sich alleine genommen unterschiedliche Vorteile aufweisen.

So zeigt Fig. 4 einen Leitsteg 18, welcher in seiner Querschnittsform aus elliptischen Teilsegmenten besteht. Das obere Teilsegment 19 ist dabei halbelliptisch ausgebildet, während die sich zu beiden Seiten daran anschließenden Teilsegmente 20 und 21 etwa einem Viertel einer Ellipse entsprechen und in einem weichen Übergang in das obere, halbelliptische Teilsegment 19 übergehen. Dadurch ergeben sich äußerst "weiche" Konturen, so dass bei einer relativ großen Höhe zur Oberfläche 5 des Baumscheibensegmentes 1 eines solchen Leitsteges 18 dieser optisch nur wenig auffällig ist. Damit wird ein Baumscheibendesign einer Baumscheibe, welches maßgeblich von der Form und Anordnung der Durchbrüche bestimmt sein soll, nur wenig optisch beeinflusst.

In ähnlicher Art und Weise ist auch der Leitsteg 28 der Ausführungsvariante der Fig. 5 ausgebildet. Dieser Leitsteg 28 bildet mit seinem oberen Teilsegment 29 etwa einen Viertelkreisbogen, an welchen sich zwei seitliche Teilsegmente 30 und 31 nahtlos anschließen. Die beiden seitlichen Teilsegmente 30 und 31 sind ebenfalls bogenförmig ausgebildet und erstrecken sich etwa über die Umfangslänge eines Achtelkreises. Damit bildet auch der Leitsteg 28 bezüglich seiner Querschnittsform äußerst "weiche" Konturen insbesondere zur Oberfläche 5 des Baumscheibensegmentes 1, so dass auch dieser Leitsteg 28 nach der Ausführungsvariante der Fig. 5 optisch auf der Oberfläche 5 kaum ins Gewicht fällt. Somit wird auch ein durch die Form und Anordnung der Durchbrüche einer Baumscheibe gestaltetes Design durch diese Art eines "weichen" Leitsteges 28 kaum beeinflusst.

Soll jedoch der Leitsteg auch als Designelement eingesetzt werden, so können auch scharfkantige Varianten vorgesehen sein. So zeigt Fig. 6 eine Variante eines Leitsteges 38, welcher eine ebene Oberfläche 39 aufweist, welche in ihren Randbereichen scharfkantig begrenzt ist. Die Seitenflächen 40 und 41 gehen dabei in die Oberfläche 5 eines Baumscheibensegmentes 1 durch jeweils ein Radienelement 42 bzw. 43 über. Aufgrund der scharfkantigen Ausbildung dieses Leitsteges 38 sowie evtl. einer etwas größeren Höhe zur Oberfläche 5 des Baumscheibensegmentes 1 ist somit dieser Leitsteg 38 optisch gut erkennbar und kann auch für gestalterische optische Zwecke eingesetzt werden.

Fig. 7 zeigt hierzu eine weitere Ausführungsvariante eines Leitsteges 48, welcher ebenfalls eine ebene Oberfläche 49 aufweist. Dabei ist dieser Leitsteg 48 in seiner Breite erheblich breiter ausgebildet als beispielsweise der Leitsteg 38 aus Fig. 6. Dadurch ist ein solcher Leitsteg 48 auf einer Oberfläche 5 eines Baumscheibensegmentes 1 deutlich erkennbar. Des Weiteren ist dieser Leitsteg 48 scharfkantig ausgebildet und weist eine etwa rechteckförmige Querschnittsform auf. Die Seitenwände 50 und 51 weisen zur Oberfläche 5 bei dieser Ausführungsvariante keinen "weichen" Übergang auf, sondern bilden jeweils eine scharfkantige Innenecke 52 bzw. 53.

Es ist erkennbar, dass die Leitstege 8, 18, 28, 38 und 48 unterschiedliche Querschnittsformen aufweisen können, je nach Zielsetzung bezüglich deren Anordnung und optischen Erkennbarkeit. Allen Leitstegen gemeinsam ist, dass sie in ihrer Höhe und Ausprägung derart ausgestaltet sind, dass abfließendes Regenwasser auf der Oberfläche 5 eines Baumscheibensegmentes 1 bzw. einer Baumscheibe 10 zielgerichtet in die Durchbrüche 8 geführt wird, wie dies zum Ausführungsbeispiel der Fig. 1 bis 3 bereits beschrieben wurde.

Da zwischenzeitlich Baumscheiben nicht nur zum Schutz des Umgebungsbereiches eines Baumes dienen, sondern auch für eine designerische Gestaltung des Umgebungsbereiches eingesetzt werden, sind unterschiedliche Formschöpfungen mit unterschiedlichen Arten von Durchbrüchen sowohl bezüglich ihrer Gestalt als auch ihrer Ausdehnung bekannt.

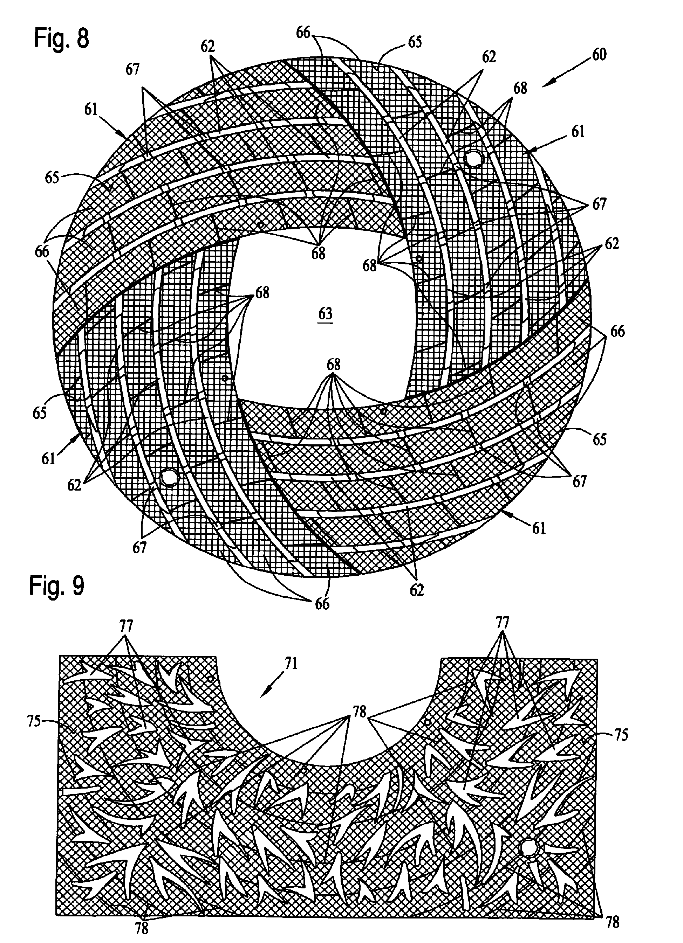

So zeigt Fig. 8 beispielhaft eine vollständige Baumscheibe 60, welche aus insgesamt vier identisch ausgebildeten Baumscheibensegmenten 61 besteht. Diese Baumscheibe 60 ist in ihrer Gesamtstruktur kreisrund ausgebildet. Die einzelnen Baumscheibensegmente 61 sind des Weiteren mit kreisbogenartig verlaufenden, als Längsschlitz ausgebildete Durchbrüchen 62 versehen. Diese Durchbrüche 62 trennen somit begehbare Oberflächen 65 des jeweiligen Baumscheibensegmentes 61 voneinander. Dementsprechend kann auch auf die Baumscheibensegmente 61 bzw. die Baumscheibe 60 auftreffendes Regenwasser durch die Durchbrüche 62 in den Untergrund, insbesondere im Umgebungsbereich des Baumstammes, gelangen.

Um nun zu verhindern, dass "zuviel" Regenwasser entlang der Oberflächen 65 abfließt, sind im Bereich dieser Oberflächen 65 mehrere im Wesentlichen quer zu den Durchbrüchen 62 verlaufende Leitstege 68 vorgesehen. Durch diese Leitstege 68 wird gewährleistet, dass, insbesondere bei einer geneigten Anordnung der einzelnen Baumscheibensegmente 61, abfließendes Regenwasser sicher in die Durchbrüche 62 geleitet wird. Um diesen Baumscheibensegmenten 61 mit ihren die Oberflächen 65 bildenden Segmentstreifen 66 eine ausreichende Stabilität zu geben, sind diese Segmentstreifen 66 unterseitig mit entsprechenden Verbindungsstegen 67 untereinander verbunden, wie dies aus dem Stand der Technik bekannt ist.

Somit ist auch zu Fig. 8 erkennbar, dass die Leitstege 68 aufgrund ihrer im Wesentlichen quer zu den Durchbrüchen 62 verlaufenden Anordnung ein "Leitsystem" für auf die Oberflächen 65 der Baumscheibensegmente 61 bzw. der Baumscheibe 60 auftreffendes Wasser bilden. Damit wird dieses Wasser zielgerichtet in die Durchbrüche 62 der Baumscheibensegmente 61 geleitet, so dass insbesondere auch im unmittelbaren Umgebungsbereich eines im Freiraum 63 befindlichen Baumstammes genügend Regenwasser zur Bewässerung des sich dort befindlichen Wurzelwerkes des Baumes in den Untergrund gelangen kann.

Fig. 9 zeigt beispielhaft eine weitere Ausführungsvariante eines Baumscheibensegmentes 71, welches mehrere optisch ansprechend gestaltete kristallartig geformte Durchbrüche 77 aufweist. In Fig. 9 stehen diese Durchbrüche 77 untereinander über entsprechende Leitstege 78 in Verbindung, welche beim dargestellten Ausführungsbeispiel der Fig. 9 beispielhaft bogenförmig verlaufend auf der Oberfläche 75 des Baumscheibensegmentes 71 angeordnet sind.

Auch hier ist erkennbar, dass ein ungehindertes Abfließen von auf dem Baumscheibensegment 71 auftreffenden Regenwasser zumindest im radial inneren Bereich durch die Leitstege 78 sicher verhindert wird. Auch diese Leitstege 78 ermöglichen einen gelenkten Abfluss von auftreffendem Regenwasser in einen der benachbarten Durchbrüche.

Je nach Ausgestaltung der Leitstege 8, 18, 28, 38, 48, 68 oder auch 78, insbesondere bezüglich deren Höhe und auch einer "weichen" oder scharfkantigen Ausgestaltung, können solche Leitstege auch die Rutschhemmung, insbesondere in feuchtem Zustand, auf der Oberfläche einer Baumscheibe 10 bzw. 60 bzw. eines Baumscheibensegmentes 1, 61 oder auch 71 erheblich verbessern. Bei einer weichen Ausgestaltung gemäß der Fig. 4 und 5 der Leitstege 18 bzw. 28 treten diese optisch so gut wie nicht in Erscheinung, so dass das Gesamtdesign beispielsweise nach den Ausführungsvarianten der Fig. 8 und 9 der Baumscheibensegmente 61 bzw. 71 nach außen hin kaum beeinflusst wird. Trotzdem wird auch eine gewisse Verbesserung der Rutschhemmung bewirkt, was zusätzlich zur gezielten Ableitung von auftreffendem Regenwasser von Vorteil ist.

## Patentansprüche

1. Baumscheibe (10, 60) zur Abdeckung und zum Schutz des Umgebungsbereiches eines Baumstammes, wobei die Baumscheibe eine begehbare und/oder befahrbare Oberfläche (5, 65, 75) bildet und für den Wasserdurchtritt mehrere Durchbrüche (7, 62, 77) unterschiedlicher oder gleicher Formgebung aufweist,
**dadurch gekennzeichnet,**
**dass** auf der Oberfläche (5) zwischen den Durchbrüchen (7, 62, 77) erhabene Leitstege (8, 18, 28, 38, 48, 68, 78) vorgesehen sind, welche sich von Rand zu Rand der Durchbrüche (7, 62, 77) erstrecken und,
**dass** die Leitstege (8, 18, 28, 38, 48, 68, 78) in ihrer Höhe und Anordnung derart ausgebildet sind, dass auf der Oberfläche (5, 65, 75) abfließendes Wasser in die Durchbrüche (7, 62, 77) geleitet wird.

2. Baumscheibe nach Anspruch 1, **dadurch gekennzeichnet, dass** die Leitstege (8, 18, 28) eine abgerundete Querschnittsform aufweisen.

3. Baumscheibe nach Anspruch 1, **dadurch gekennzeichnet, dass** die Leitstege (38, 48) eine quadratische oder rechteckige Querschnittsform aufweisen.

4. Baumscheibe nach Anspruch 1, **dadurch gekennzeichnet, dass** die Leitstege (38) eine ebene Oberseite (39) bilden und,
dass die Leitstege (38) zur Oberfläche (5) der Baumscheibe hin einen abgerundeten Übergangsbereich (42, 43) bilden.

5. Baumscheibe nach einem der Ansprüche 1 bis 4, **dadurch gekennzeichnet, dass** die Leitstege (8, 18, 28, 38, 48, 68, 78) eine Höhe von 0,5 mm bis 2,5 mm aufweisen.

6. Baumscheibe nach einem der Ansprüche 1 bis 5, **dadurch gekennzeichnet, dass** die Leitstege (8, 18, 28, 38, 48, 68, 78) eine Breite von 1 mm bis 3 mm aufweisen.

7. Baumscheibe nach einem der Ansprüche 1 bis 6, **dadurch gekennzeichnet, dass** die Durchbrüche (62) geradlinig und/oder bogenförmig verlaufen.

8. Baumscheibe nach einem der Ansprüche 1 bis 6, **dadurch gekennzeichnet, dass** die Durchbrüche (7) in gleichmäßiger Verteilung in der Baumscheibe angeordnet sind und einen kreisrunden oder ovalen Querschnitt aufweisen.

9. Baumscheibe nach einem der Ansprüche 1 bis 8, **dadurch gekennzeichnet, dass** die Durchbrüche (7, 62, 77) einen Flächenanteil von etwa 20 % bis 40 % der Oberfläche (5, 65, 75) der Baumscheibe einnehmen.

10. Baumscheibe nach einem der Ansprüche 1 bis 9, **dadurch gekennzeichnet, dass** die Oberfläche (5, 65, 75) der Baumscheibe eben ausgebildet ist oder ebene, konkave und/oder konvexe Bereiche aufweist und/oder in gerader oder schräger Einbaulage auf dem Untergrund angeordnet ist.

## Claims

1. Tree grate (10, 60) for covering, and for protecting, the region surrounding a tree trunk, wherein the tree grate forms a surface (5, 65, 75), which can be subjected to foot and/or wheeled traffic, and has a plurality of apertures (7, 62, 77) of different shapings or the same shapings for the through-passage of water,
**characterized**
**in that** elevated directing crosspieces (8, 18, 28, 38, 48, 68, 78) are provided on the surface (5) between the apertures (7, 62, 77) and extend from periphery to periphery of the apertures (7, 62, 77), and
**in that** the directing crosspieces (8, 18, 28, 38, 48, 68, 78) are designed, in terms of height and arrangement, such that water flowing out on the surface (5, 65, 75) is directed into the apertures (7, 62, 77).

2. Tree grate according to Claim 1, **characterized in that** the directing crosspieces (8, 18, 28) have a rounded cross-sectional shape.

3. Tree grate according to Claim 1, **characterized in that** the directing crosspieces (38, 48) have a square or rectangular cross-sectional shape.

4. Tree grate according to Claim 1, **characterized in that** the directing crosspieces (38) form a planar upper side (39), and
**in that** the directing crosspieces (38) form a rounded transition region (42, 43) in the direction of the surface (5) of the tree grate.

5. Tree grate according to one of Claims 1 to 4, **characterized in that** the directing crosspieces (8, 18, 28, 38, 48, 68, 78) have a height of 0.5 mm to 2.5 mm.

6. Tree grate according to one of Claims 1 to 5, **characterized in that** the directing crosspieces (8, 18, 28, 38, 48, 68, 78) have a width of 1 mm to 3 mm.

7. Tree grate according to one of Claims 1 to 6, **characterized in that** the apertures (62) have a rectilinear and/or arcuate progression.

8. Tree grate according to one of Claims 1 to 6, **characterized in that** the apertures (7) are distributed uniformly in the tree grate and have a round or oval cross section.

9. Tree grate according to one of Claims 1 to 8, **characterized in that** the apertures (7, 62, 77) occupy a fraction of approximately 20% to 40% of the surface (5, 65, 75) of the tree grate.

10. Tree grate according to one of Claims 1 to 9, **characterized in that** the surface (5, 65, 75) of the tree grate is of planar design or has planar, concave and/or convex regions and/or is arranged in a rectilinear or oblique installation position on the underlying surface.

## Revendications

1. Grille d'arbre (10, 60) pour le recouvrement et la protection de la zone avoisinante d'un tronc d'arbre, dans laquelle la grille d'arbre forme une surface accessible aux piétons et/ou aux véhicules (5, 65, 75) et présente plusieurs ouvertures (7, 62, 77) de forme différente ou identique pour le passage de l'eau, **caractérisée en ce qu'**il est prévu sur la surface (5), entre les ouvertures (7, 62, 77), des nervures de guidage surélevées (8, 18, 28, 38, 48, 68, 78) qui s'étendent d'un bord à l'autre des ouvertures (7, 62, 77), et **en ce que** les nervures de guidage (8, 18, 28, 38, 48, 68, 78) sont configurées, en ce qui concerne leur hauteur et leur disposition, de telle manière que l'eau s'écoulant sur la surface (5, 65, 75) soit conduite dans les ouvertures (7, 62, 77).

2. Grille d'arbre selon la revendication 1, **caractérisée en ce que** les nervures de guidage (8, 18, 28) présentent une section transversale de forme arrondie.

3. Grille d'arbre selon la revendication 1, **caractérisée en ce que** les nervures de guidage (38, 48) présentent une section transversale de forme carrée ou rectangulaire.

4. Grille d'arbre selon la revendication 1, **caractérisée en ce que** les nervures de guidage (38) forment une face supérieure plane (39) et **en ce que** les nervures de guidage (38) forment une zone de transition arrondie (42, 43) vers la surface (5) de la grille d'arbre.

5. Grille d'arbre selon l'une quelconque des revendications 1 à 4, **caractérisée en ce que** les nervures de guidage (8, 18, 28, 38, 48, 68, 78) présentent une hauteur de 0,5 mm à 2,5 mm.

6. Grille d'arbre selon l'une quelconque des revendications 1 à 5, **caractérisée en ce que** les nervures de guidage (8, 18, 28, 38, 48, 68, 78) présentent une largeur de 1 mm à 3 mm.

7. Grille d'arbre selon l'une quelconque des revendications 1 à 6, **caractérisée en ce que** les ouvertures (62) s'étendent en ligne droite et/ou en forme d'arc.

8. Grille d'arbre selon l'une quelconque des revendications 1 à 6, **caractérisée en ce que** les ouvertures (7) sont disposées avec une répartition uniforme dans la grille d'arbre et présentent une section transversale ronde ou ovale.

9. Grille d'arbre selon l'une quelconque des revendications 1 à 8, **caractérisée en ce que** les ouvertures (7, 62, 77) occupent une partie de surface d'environ 20 % à 40 % de la surface (5, 65, 75) de la grille d'arbre.

10. Grille d'arbre selon l'une quelconque des revendications 1 à 9, **caractérisée en ce que** la surface (5, 65, 75) de la grille d'arbre est plane ou présente des zones planes, concaves et/ou convexes et/ou est disposée en position droite ou inclinée sur le sol.
